# EUROPÄISCHE PATENTSCHRIFT

(11) **EP 1 318 961 B1**
(45) Veröffentlichungstag und Bekanntmachung des Hinweises auf die Patenterteilung: **28.01.2004**
(21) Anmeldenummer: 01978113.7
(22) Anmeldetag: 07.09.2001
(51) Int. Cl.: B65G 69/18

(54) **EINRICHTUNG ZUM EINFÜLLEN EINES SCHÜTTGUTES IN EINEN BEHÄLTER UND VERFAHREN ZUR ANWENDUNG**
DEVICE FOR CHARGING A BULK MATERIAL INTO A CONTAINER AND METHOD FOR THE USE THEREOF
DISPOSITIF POUR VERSER UNE MATIERE EN VRAC DANS UN CONTENANT ET PROCEDE CORRESPONDANT

(30) Priorität: 09.09.2000 DE 10044666
(43) Veröffentlichungstag der Anmeldung: 18.06.2003
(73) Patentinhaber: Glatt Systemtechnik GmbH, 01277 Dresden (DE)
(72) Erfinder: DÖRFFEL, Wolfgang, 01219 Dresden (DE); KRIEGER, Siegfried, 01277 Dresden (DE)
(74) Vertreter: Pätzelt, Peter, Dipl.-Ing.
(86) Internationale Anmeldenummer: PCT/DE2001/003478
(87) Internationale Veröffentlichungsnummer: WO 2002/020383

(56) Entgegenhaltungen:
- DE-A- 4 211 855
- DE-U- 7 218 354

## Beschreibung

### Technisches Gebiet

Die Erfindung betrifft eine Einrichtung zum Einfüllen eines Schüttgutes in einen Behälter, die eine Vorrichtung zur Absaugung von Staub aufweist, der beim Befüllen des Behälters in die Umgebung gelangen kann. Des Weiteren betrifft die Erfindung ein Verfahren zur Anwendung einer erfindungsgemäßen Einrichtung.

### Stand der Technik

Nach dem Stand der Technik sind verschiedene Einrichtungen zum Einfüllen eines Schüttgutes in Behältnisse bekannt. Dabei sind im vorliegenden Fall solche Einrichtungen relevant, die für staubhaltiges Schüttgut geeignet sind oder für solches Schüttgut, bei dem Staub z.B. durch Abrieb beim Transferieren entstehen kann.

Allgemein sind offene Ablufthauben bekannt, die über der Füllstelle angeordnet sind.

Die DE 42 11 855 A1 beschreibt eine Vorrichtung zum Verladen von Schüttgut. In einer Ausführungsform ist im Bereich des Eintritts des Schüttgutes an der Verladevorrichtung ein Entstaubungsstutzen vorgesehen. Eine Staubrückführungsleitung führt zur Rückführung von Staubluft vom zu beladenden Behälter in den Verladetrichter der Verladevorrichtung. Beim Betrieb der Vorrichtung wird der Staub innerhalb der Verladevorrichtung durch den Luftstrom zum Entstaubungsstutzen geleitet, wobei im Innenraum der Vorrichtung ein Unterdruck vorhanden ist. Die Vorrichtung wird beim Verladen des Schüttgutes mit dem zu beladenden Behälter staubabdichtend gekuppelt. Dabei wird die Trichtermündung und die Staubrückführungsleitung parallel in die Öffnung des zu beladenden Behälters eingeführt.

Die DE 72 18 354 Ul beschreibt eine Beladevorrichtung zur staubfreien Beladung von Silos mit Schüttgütern. Die Beladevorrichtung weist ein Füllrohr auf, dessen unteres Ende von einem gummierten Beladekonus umgeben ist. Der ringförmig um das Füllrohr angeordnete Beladekonus dient gleichzeitig als Staubabzugsstutzen, der über einen Faltenbalg mit einer Absaug- und Entstaubungseinrichtung funktionell verbunden ist. Beim Füllvorgang sitzt der Beladekonus fest und staubdicht in dem Einfülloch des Silos.

Nachteilig ist dabei, dass mindestens der teilweise Austritt von Staub in die,Umgebung nicht verhindert werden kann oder eine relativ aufwendige Abdichtung der Trichtermündung und der Staubrückführungsleitung zur Öffnung des zu beladenden Behälters erforderlich ist. Des Weiteren ist nachteilig, dass durch die Kupplung der Vorrichtung und der Staubrückführungsleitung mit dem zu beladenden Behälter Verbindungskräfte wirksam werden, durch die ein genaues Bestimmen der Netto-Füllmenge während des Befüllens nicht möglich ist.

### Darstellung der Erfindung

Der Erfindung liegt damit als Aufgabe zugrunde, eine Einrichtung zum Einfüllen eines Schüttgutes in einen Behälter der eingangs genannten Art anzugeben, die den Eintritt von Staub aus dem Schüttgut in die Umgebung verhindert. Des Weiteren soll ein Verfahren zur Anwendung der Einrichtung angegeben werden. Dabei soll es auch möglich sein, die Nettofüllmenge während des Einfüllens des Schüttgutes in den Behälter genau zu bestimmen.

Die Erfindung löst die Aufgabe für die Einrichtung durch die im kennzeichnenden Teil des Anspruchs 1 genannten Merkmale. Vorteilhafte Weiterbildungen der Einrichtung sind in den Unteransprüchen 2 bis 6 gekennzeichnet und werden nachstehend zusammen mit der Beschreibung der bevorzugten Ausführung der Erfindung, einschließlich der Zeichnung, näher dargestellt.

Die Aufgabe für das Verfahren wird durch den kennzeichneten Teil des Anspruchs 7 gelöst. Eine vorteilhafte Weiterbildungen des Verfahrens ist im Unteranspruch 8 gekennzeichnet.

Der Kern der Erfindung besteht insbesondere darin, dass die Einrichtung ein Gehäuse aufweist, dessen Innenraum mit einer externen Vorrichtung zur Staubabsaugung verbunden ist, dass innerhalb des Gehäuses das Füllrohr lagert und dass am Gehäuse radial außerhalb der Einfüllöffnung des zu befüllenden Behälters Lufteintrittsöffnungen vorhanden sind.

Bei der verfahrensgemäßen Anwendung der Einrichtung zum Füllen eines Behälters mit einem Schüttgut, wird die Einrichtung, konkret die Füllseite des Gehäuses, derart über dem Behälter, d.h. über dessen Einfüllöffnung, positioniert, dass ein definierter Spalt zwischen dem Gehäuse und dem Behälter entsteht. Verfahrensgemäß wird weiterhin die Vorrichtung zur Staubabsaugung in Betrieb gesetzt.

Die Vorrichtung zur Staubabsaugung erzeugt im Gehäuse der Einrichtung einen Unterdruck, was dazu führt, dass Luft aus der Umgebung in die Lufteintrittsöffnungen an der Füllseite in das Gehäuse einströmt. In vorteilhafter Weise wird an der Füllseite des Gehäuses radial außerhalb der Einfüllöffnung des Behälters und der Lufteintrittsöffnungen ein Bund angeordnet. Dieser Bund soll in der Füllstellung den äußeren Rand der Einfüllöffnung axial überragen. Damit wird der Luftstrom im wesentlichen in eine vertikale Richtung gelenkt und Wirbel der Luft, durch die möglicherweise doch Staub in die Umgebung gelangen könnte, werden vermieden.

Der Luftstrom umspült die Einfüllöffnung des Behälters schlauchartig. Das führt dazu, dass alle beim Befüllen des Behälters aus diesem austretenden Gase und Staubteilchen mitgerissen werden. Das Austreten von Staub aus dem Spalt zwischen der Einrichtung und der Einfüllöffnung wird durch den Luftstrom praktisch verhindert.

Das Füllrohr ist in einer vorteilhaften Ausgestaltung gegenüber dem Gehäuse leicht demontierbar angeordnet. Dazu ist das Füllrohr mittels Gummimanschetten im Gehäuse gelagert und gegenüber diesem abgedichtet. Dadurch werden vorhandene Schwingungen des Schüttguttransfers gegenüber der Einrichtung abgebaut. Das Füllrohr kann in einfacher Weise aus dem Gehäuse herausgezogen werden.

Das ist beispielsweise vorteilhaft, wenn zeitlich nacheinander unterschiedliche Schüttgüter mit verschiedenen Füllrohren über die Einrichtung transferiert werden sollen. Insbesondere bei pharmazeutischen Schüttgütern, z. B. Pulver oder Granulate, ist es technologisch erforderlich, die gesamte Einrichtung zyklisch zu reinigen. Dazu muss die Einrichtung, einschließlich des Füllrohres, demontiert und einer Wascheinrichtung zugeführt werden.

Die konkrete Ausbildung des Gehäuses mit dem Füllrohr und Mitteln der Luftführung kann in großer Breite variiert und an die geometrischen und baulichen Gegebenheiten angepasst werden.

Während der Ruhestellung der Einrichtung, d.h. wenn kein zu befüllender Behälter unter der Einrichtung positioniert ist, hat es sich als vorteilhaft erwiesen, eine Schutzeinrichtung unterhalb des Gehäuses und insbesondere unter der Austrittsöffnung des Füllrohres anzuordnen. Damit wird verhindert, dass Reste des Schüttgutes unbeabsichtigt aus dem Füllrohr ins Freie rieseln oder dass Staubablagerungen aus dem Füllrohr herausfallen und die Umgebung verschmutzen.

In wie weit es erforderlich ist, die Vorrichtung zur Staubabsaugung auch dann in Funktion zu lassen, wenn die Austrittsöffnung des Füllrohres tatsächlich verschlossen ist, wird von den konkreten technologischen Bedingungen bestimmt.

Als Schutzeinrichtung können schieber-, klappen-, schwenkplatten- oder irisblendenartige Einrichtungen, wie sie nach dem Stand der Technik allgemein bekannt sind, eingesetzt werden. Die praktische Auswahl wird maßgeblich von den örtlichen Gegebenheiten beeinflusst. Die Schutzeinrichtung wird in vorteilhafter Weise in einem eigenen Gehäuse gelagert. Bei Nichtnutzung kann sie in das Gehäuse eingefahren werden. Dabei können am Gehäuse besondere Saugschlitze vorgesehen sein, die beim Einfahren der Schutzeinrichtung vorhandene Schüttgutreste absaugen.

Die Erfindung wird nachstehend an zwei Ausführungsbeispielen näher erläutert. In der zugehörigen Zeichnung zeigt in
- Figur 1, zum Ausführungsbeispiel I, eine erfindungsgemäße Einrichtung in einer Deckenanordnung,
- Figur 2 zeigt einen Schnitt durch das Gehäuse nach Figur 1 und
- Figur 3 zeigt, zugehörig zum Ausführungsbeispiel II, eine erfindungsgemäße Einrichtung in Ständerbauweise.

### Ausführungsbeispiel I

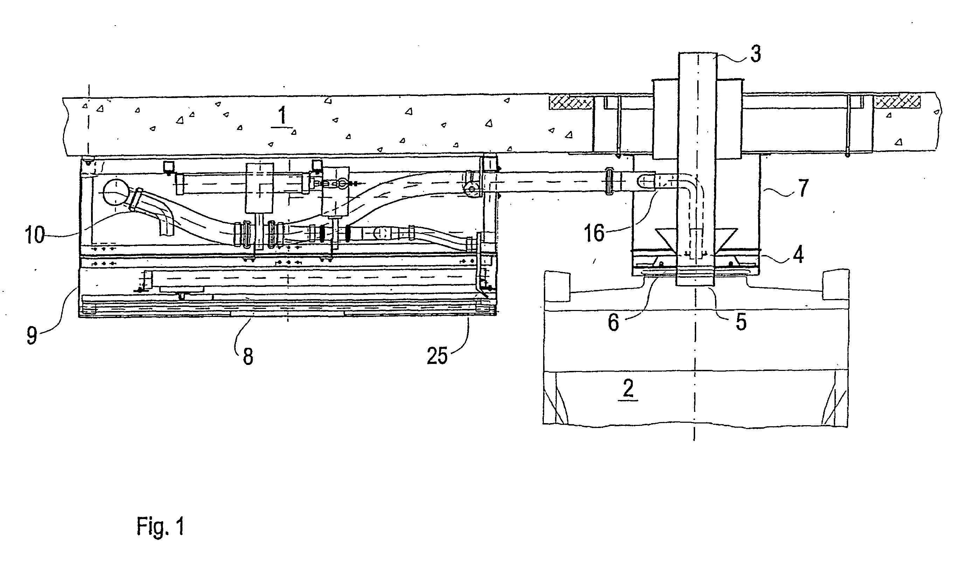

Figur 1 zeigt zum Ausführungsbeispiel I eine erfindungsgemäße Einrichtung, die an einer Raumdecke 1 angeordnet ist. Oberhalb der Decke können sich beispielsweise nicht dargestellte Silos oder Produktionsanlagen für ein pharmazeutisches Pulver als Schüttgut befinden. Dieses Pulver soll in den Behälter 2 unterhalb der Decke 1 transferiert werden. Dabei lagert der Behälter 2 auf einer Waage, mit der die genaue Netto-Füllmenge des Pulvers bestimmt werden soll.

Die eigentliche erfindungsgemäße Einrichtung besteht aus einem geschlossenen Gehäuse 4 mit Luftansaugrohren 16 und einem Ringspalt 21. Durch das Gehäuse 4 führt ein Füllrohr 3, dessen Auslassöffnung 5 in die Einfüllöffnung 6 des Behälters 2 eintaucht.

Das Gehäuse 4 ist über eine Tragvorrichtung 7 an der Decke 1 gehaltert. Seitlich vom Gehäuse 4 und der Auslassöffnung 5 ist ein Schieber 8 als Schutzeinrichtung angeordnet. Während der Ruhestellung, wenn sich kein Behälter 2 unter dem Füllrohr 3 befindet, kann damit die Auslassöffnung 5 von unten derart abgedeckt werden, dass Schüttgutreste aus dem Füllrohr 3 und dem Gehäuse 4 insgesamt nicht auf den Boden rieseln können. Der Schieber 8 kann in einfacher Weise unter das Gehäuse 4 mit dem Füllrohr 3 gefahren werden.

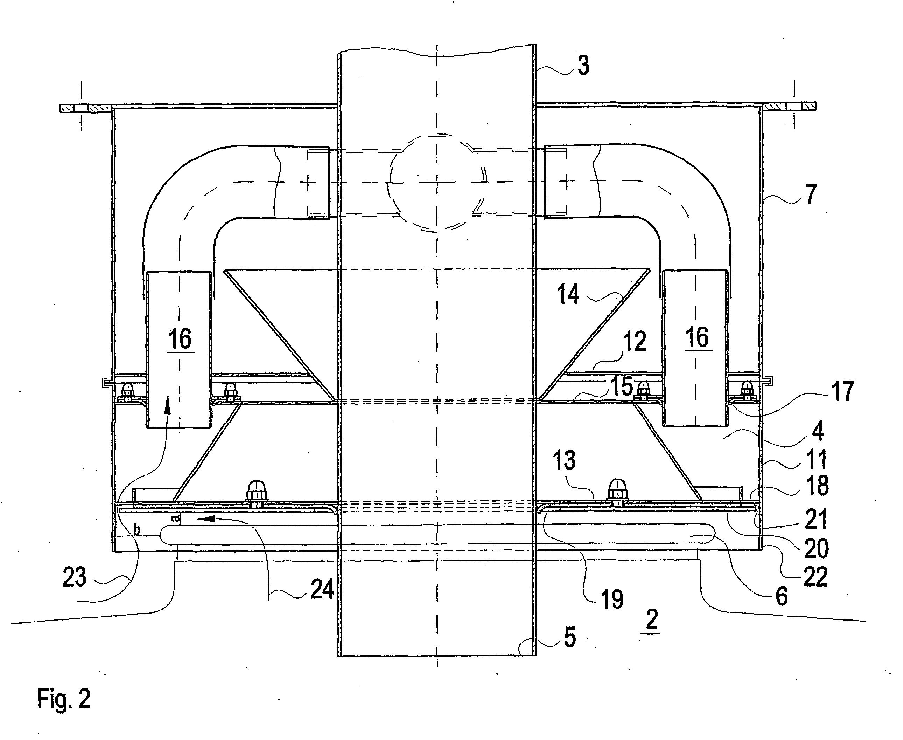

In Figur 2 ist die Einrichtung im Bereich des Gehäuses 4 näher dargestellt. Dabei ist der Behälter 2 mit der Einfüllöffnung 6 in Strich-Punktlinien angedeutet.

Das Gehäuse 4 besteht im Wesentlichen aus einem äußeren Zylinder 11, der mit der Trageinrichtung 7 konstruktiv verbunden ist, der oberen Abdeckplatte 12 und der Füllseite 13. Das Füllrohr,3 durchdringt das Gehäuse 4 zentrisch von oben. Dabei führt das Füllrohr 3 über einen Führungstrichter 14 durch die obere Abdeckplatte 12 und tritt unten aus der Füllseite 13 wieder aus. Die Länge des Füllrohres 3 vom Austritt an der Füllseite 13 bis zur Auslassöffnung 5 ist so bemessen, dass die aus dem Behälter 2 während des Befüllens entweichende Luft mit Staubteilchen den Schüttgutstrom möglichst nicht aufwirbeln.

Ein Führungstrichter 14 dient als Hilfsmittel zum Einführen des Füllrohres 3 in das Gehäuse 4, wenn das Füllrohr gewechselt wird oder wenn es nach einer erforderlichen Reinigung neu in das Gehäuse 4 eingesetzt wird.

Innerhalb des Gehäuses 4 befindet sich eine zum Füllrohr 3 konzentrische Halteplatte 15, in deren äußeren Bereich zwei gegenüberliegende Luftansaugrohre 16 einmünden und dort unter Zwischenschaltung von Gummimanschetten 17 gehaltert sind. Die Luftansaugrohre 16 sind über die Rohrelemente 10 (Figur 1) mit einer nicht dargestellten Vorrichtung zur Staubabsaugung verbunden.

Die Füllseite 13 des Gehäuses 4 ist eine Kombination aus einer unteren Abdeckplatte 18, einer Gummimanschette 19 und einer Strömungsplatte 20.

Die untere Abdeckplatte 18 gewährleistet die erforderliche mechanische Stabilität der Füllseite 13. Über die Gummimanschette 19 wird das Füllrohr 3 zentrisch und elastisch gehaltert sowie gleichzeitig abgedichtet. Die Strömungsplatte 20 haltert die Gummimanschette 19 an der unteren Abdeckplatte 18 und definiert mit seiner äußeren Kante einen Ringspalt 21 bis zu einem Bund 22. Der Bund 22 ist dabei eine Verlängerung des äußeren Zylinders 11, der axial über die Einfüllöffnung 6 am Behälter 2 ragt.

Der Schieber 8 ist in einem Gehäuse 9 gehaltert, in das er bei Nichtnutzung eingefahren werden kann. Das Gehäuse 9 nimmt im Ausführungsbeispiel auch Rohrelemente 10 der Einrichtung zur Staubabsaugung auf. Dabei wird auch der Innenraum des Gehäuses 9 an die Vorrichtung zur Staubabsaugung angeschlossen. An der Seite, aus der der Schieber 8 aus dem bzw. in das Gehäuse 9 bewegt wird, befinden sich Saugschlitze 25, die ebenfalls an die Einrichtung zur Staubabsaugung angeschlossen sind und durch ihre Gestaltung auf dem Schieber 8 vorhandene Schüttgutreste während des Einfahrens in das Gehäuse 9 absaugen.

Nachfolgend wird die verfahrensgemäße Anwendung der erfindungsgemäßen Einrichtung näher beschrieben.

Zum Befüllen mit dem pharmazeutischen Pulver wird der Behälter 2 axial unter dem Füllrohr 3 positioniert. Dabei lagert der Behälter 2 auf einer Waage. Die Vorrichtung zur Staubabsaugung wird, soweit sie bisher nicht bereits in Betrieb war, in Betrieb gesetzt. Dadurch entsteht im Gehäuse 4 ein Unterdruck, der wiederum einen Luftstrom durch den Ringspalt 21 erzeugt. Danach wird der Schieber 8 von der Position unter der Auslassöffnung 5 des Füllrohres 3 in die Position innerhalb des Gehäuses 9 bewegt.

Anschließend wird der Behälter über eine nicht dargestellte Hubeinrichtung angehoben bis der Abstand a (Figur 2) zwischen der Füllseite 13 und der Einfüllöffnung 6 eine definierte Größe angenommen hat. In dieser Stellung bildet sich ein schlauchförmiger vertikaler Luftstrom 23 aus, der von der Umgebung durch den Ringspalt b, der zwischen dem Bund 22 und dem Außenrand der Einfüllöffnung 6 ausgebildet wird, über den Ringspalt 21 in das Gehäuse 4 und danach in die Luftansaugrohre 16 führt.

Der Abstand a ist in Abhängigkeit des Ringspaltes b sowie der übrigen geometrischen Verhältnisse so gewählt, dass der Luftstrom 24, der als staubhaltige Abluft beim Befüllen aus dem Behälter 2 entweicht, vom Luftstrom 23 mitgerissen wird und nicht in die Umgebung gelangen kann.

Während des Befüllens des Behälters 2 wird verfahrensgemäß unter Verwendung der beschriebenen Waage ständig das Gesamtgewicht des Behälters 2 mit dem Schüttgut ermittelt und unter Abzug der Masse des Behälters 2 die genaue Netto-Füllmenge des Schüttgutes bestimmt. Das Befüllen des Behälters 2 wird beendet, wenn die vorgegebene Netto-Füllmenge genau erreicht ist.

Der Vorteil der Erfindung besteht insbesondere darin, dass beim Befüllen des Behälters 2 mit einer damit verbundenen relativ großen Staubentwicklung kein Staub in die Umgebung gelangt und über die Einrichtung zur Staubabsaugung sicher entsorgt werden kann. Des Weiteren kann eine vorgegebene Netto-Füllmenge mit großer Genauigkeit in den Behälter 2 eingefüllt werden. Das ist möglich, da der Behälter 2 mit der erfindungsgemäßen Einrichtung keine kraftschlüssige Verbindung aufweist. Damit wirken auch keine unbestimmten Vertikalkräfte auf den Behälter 2 ein, die die Messwerte beim Wiegen verfälschen können.

### Ausführungsbeispiel II

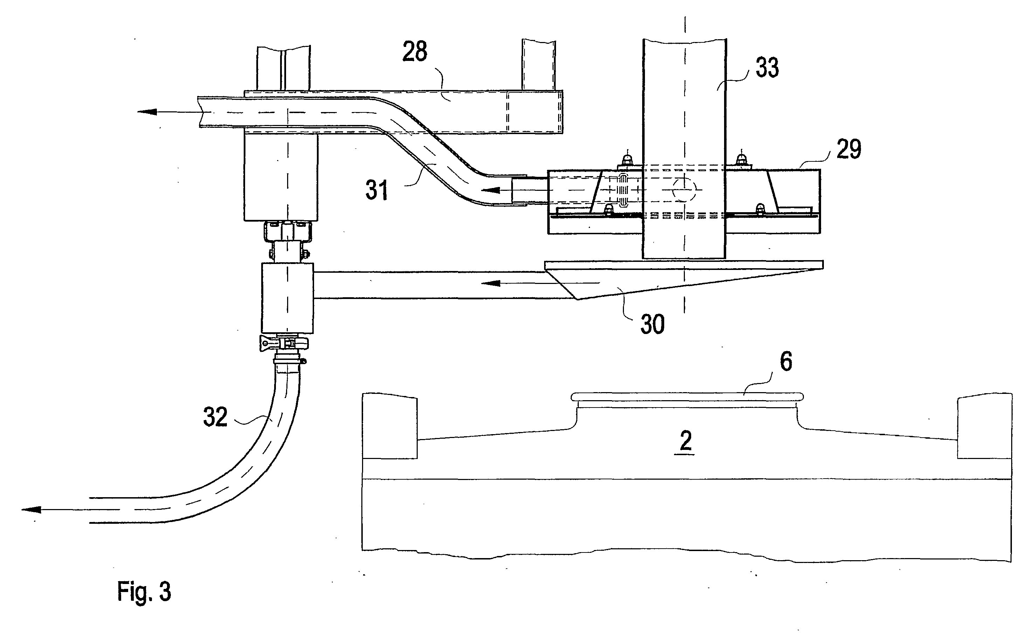

In Figur 3 ist eine erfindungsgemäße Einrichtung dargestellt, die in Form einer Ständerbauweise ausgebildet ist. Der Ständer 28 ist nur teilweise angedeutet. Seine konkrete Form ist an die Gegebenheiten angepasst. Am Ständer 28 ist ein Gehäuse 29, eine Schutzeinrichtung in Form einer Schwenkplatte 30 und Rohrleitungen 31 und 32, die zu einer Vorrichtung zur Staubabsaugung führen, gehaltert. Durch das Gehäuse 29 ist ein Füllrohr 33 geführt. Die spezifische Ausbildung des Gehäuses 29 ist weitgehend ähnlich dem Gehäuse 4 im Ausführungsbeispiel I.

In Figur 3 befindet sich ein Behälter 2 mit einer Einfüllöffnung 6 gegenüber dem Gehäuse 29 in einer abgesenkten Position und die Schutzeinrichtung 30 befindet sich unter dem Gehäuse 29 und dem Füllrohr 33. Dabei ist im Ausführungsbeispiel II die gesamte tellerförmige Schutzeinrichtung 30 über die Rohrleitung 32 mit der Vorrichtung zu Staubabsaugung verbunden und aus dem Füllrohr 33 oder vom Gehäuse 29 herabfallende Schüttgutreste werden sofort abgesaugt.

Die Erfindung ist selbstverständlich nicht auf das beschriebene Ausführungsbeispiel beschränkt. So ist es ohne weiteres möglich die einzelnen Teile variabel an die örtlichen Gegebenheiten anzupassen.

## Patentansprüche

1. Einrichtung zum Einfüllen eines Schüttgutes in einen Behälter (2), bestehend aus einer externen Vorrichtung zur Staubabsaugung, einem geschlossenen Gehäuse (4, 29), dessen Innenraum mit der Vorrichtung zur Staubabsaugung verbunden ist und das eine Füllseite (13) aufweist, die beim Befüllen des Behälters (2) einer an diesem vorgesehenen Einfüllöffnung (6) gegenüberliegt, einem Füllrohr (3, 33), welches das Gehäuse (4) axial zur Achse der Einfüllöffnung (6) durchdringt und derart weit übersteht, dass es in der Füllstellung in die Einfüllöffnung (6) ragt, und Lufteintrittsöffnungen an der Füllseite (13), **dadurch gekennzeichnet, dass** die Fällseite derart ausgebildet ist, dass, in der Einfüllstellung, die Lufteintrittsöffnungen sich radial außerhalb der Einfüllöffnung (6) des Behälters befinden.

2. Einrichtung nach Anspruch 1, **dadurch gekennzeichnet, dass** die Lufteintrittsöffnungen in Form eines Ringspaltes (21) ausgebildet sind.

3. Einrichtung nach Anspruch 1 oder 2, **dadurch gekennzeichnet, dass** radial außerhalb der Lufteintrittsöffnungen an der Füllseite (3) des Behälters (2) ein Bund (22) vorhanden ist, der in der Füllstellung axial über den äußeren Rand der Einfüllöffnung (6) ragt

4. Einrichtung nach einem der Ansprüche 1 bis 3, **dadurch gekennzeichnet, dass** das Füllrohr (3, 33) im Gehäuse (4, 29) mindestens teilweise mittels elastischer Dichtungen gehaltert und abgedichtet ist.

5. Einrichtung nach einem der Ansprüche 1 bis 4, **dadurch gekennzeichnet, dass** unterhalb des Gehäuses (4, 29) eine Schutzeinrichtung vorhanden ist, die in der Ruhestellung, wenn sich kein Behälter (2) unter der Einrichtung befindet, mindestens die Auslassöffnung (5) des Füllrohres (3, 33) abdeckt.

6. Einrichtung nach einem der Ansprüche 1 bis 5, **dadurch gekennzeichnet, dass** unterhalb des Gehäuses (4, 29) eine Wägeeinrichtung vorhanden ist, auf die der Behälter (2) gelagert werden kann.

7. Verfahren zur Anwendung einer Einrichtung nach einem der Ansprüche 1 bis 6, **dadurch gekennzeichnet, dass** zum Befüllen des Behälters (2) die Füllseite (13) des Gehäuses (4) derart über der Einfüllöffnung (2) des Behälters (2) positioniert wird, dass zwischen der Füllseite (13) und der Einfüllöffnung (6) ein Spalt (a) entsteht und dass mindestens während des Befüllens des Behälters (2) die Vorrichtung,zur Staubabsaugung in Betrieb gesetzt wird.

8. Verfahren zur Anwendung einer Einrichtung nach Anspruch 6, **dadurch gekennzeichnet, dass** mindestens während des Befüllens des Behälters (2) mittels der Wägeeinrichtung die Netto-Füllmenge des Behälters (2) bestimmt wird.

## Claims

1. Apparatus for introducing bulk goods into a container (2), comprising an external arrangement for extracting dust by suction, a closed housing (4, 29), of which the interior is connected to the arrangement for extracting dust by suction and which has a filling side (13) which, during filling of the container (2), is located opposite an introduction opening (6) provided in said container, also comprising a filling tube (3, 33), which passes through the housing (4) axially in relation to the axis of the introduction opening (6) and protrudes to such an extent that, in the filling position, it projects into the introduction opening (6), and further comprising air-inlet openings on the filling side (13), **characterized in that** the filing side is designed such that, in the introduction position, the air-inlet openings are located radially outside the introduction opening (6) of the container.

2. Apparatus according to Claim 1, **characterized in that** the air-inlet openings are designed in the form of an annular gap (21).

3. Apparatus according to Claim 1 or 2, **characterized in that** provided radially outside the air-inlet openings, on the filling side (13) of the housing (4), is a collar (22) which, in the filling position, projects axially beyond the outer border of the introduction opening (6).

4. Apparatus according to one of Claims 1 to 3, **characterized in that** the filling tube (3, 33) is at least partially secured and sealing in the housing (4, 29) by means of elastic seals.

5. Apparatus according to one of Claims 1 to 4, **characterized in that** provided beneath the housing (4, 29) is a protecting means which, in the rest position, when there is no container (2) located beneath the apparatus, covers at least the outlet opening (5) of the filling tube (3, 33).

6. Apparatus according to one of Claims 1 to 5, **characterized in that** provided beneath the housing (4, 29) is a weighing apparatus, on which the container (2) may be mounted.

7. Process for using an apparatus according to one of Claims 1 to 6, **characterized in that**, for the purpose of filling the container (2), the filling side (13) of the housing (4) is positioned above the introduction opening (6) of the container (2) such that a gap (a) is produced between the filling side (13) and the introduction opening (6), and **in that** the arrangement for extracting dust by suction is set in operation at least during filling of the container (2).

8. Process for using an apparatus according to Claim 7, **characterized in that** the net filling quantity of the container (2) is determined by means of the weighing apparatus at least during filling of the container (2).

## Revendications

1. Dispositif pour verser une matière en vrac dans un contenant (2), se composant d'un dispositif externe pour l'absorption de poussière, d'un boîtier fermé (4, 29) dont l'espace interne est connecté au dispositif pour l'absorption de poussière et qui présente un côté de remplissage (13) qui, lors du remplissage du contenant (2), se trouve en face d'une ouverture de remplissage (6) prévue sur celui-ci, d'un tube de remplissage (3, 33) qui traverse le boîtier (4) axialement par rapport à l'axe de l'ouverture de remplissage (6) et dépasse suffisamment loin pour pénétrer, dans la position de remplissage, dans l'ouverture de remplissage (6), et d'ouvertures d'entrée d'air au niveau du côté de remplissage (13), **caractérisé en ce que** le côté de remplissage est réalisé de telle sorte que, dans la position de remplissage, les ouvertures d'entrée d'air se situent radialement en dehors de l'ouverture de remplissage (6) du contenant.

2. Dispositif selon la revendication 1, **caractérisé en ce que** les ouvertures d'entrée d'air sont réalisées en forme de fente annulaire (21).

3. Dispositif selon la revendication 1 ou 2, **caractérisé en ce qu'**un épaulement (22) est prévu radialement en dehors des ouvertures d'entrée d'air au niveau du côté de remplissage (3) du contenant (2), lequel dépasse axialement, dans la position de remplissage, au-delà du bord extérieur de l'ouverture de remplissage (6).

4. Dispositif selon l'une quelconque des revendications 1 à 3, **caractérisé en ce que** le tube de remplissage (3, 33) dans le boîtier (4, 29) est maintenu et est rendu hermétique au moins partiellement au moyen de joints élastiques.

5. Dispositif selon l'une quelconque des revendications 1 à 4, **caractérisé en ce qu'**en dessous du boîtier (4,29) est prévu un dispositif de protection qui, dans la position de repos, lorsqu'aucun contenant (2) ne se trouve sous le dispositif, recouvre au moins l'ouverture de sortie (5) du tube de remplissage (3, 33).

6. Dispositif selon l'une quelconque des revendications 1 à 5, **caractérisé en ce qu'**en dessous du boîtier (4, 29) est prévu un dispositif de pesée sur lequel peut être placé le contenant (2).

7. Procédé pour l'utilisation d'un dispositif selon l'une quelconque des revendications 1 à 6, **caractérisé en ce que** pour le remplissage du contenant (2), le côté de remplissage (13) du boîtier (4) est positionné de telle sorte au-dessus de l'ouverture de remplissage (6) du contenant (2) qu'il se forme entre le côté de remplissage (13) et l'ouverture de remplissage (6) une fente (a) et **en ce qu'**au moins pendant le remplissage du contenant (2), le dispositif pour l'absorption de poussière est mis en service.

8. Procédé pour l'utilisation d'un dispositif selon la revendication 6, **caractérisé en ce qu'**au moins pendant le remplissage du contenant (2), la quantité de remplissage nette du contenant (2) est déterminée au moyen du dispositif de pesée.
